# EUROPÄISCHE PATENTSCHRIFT

(11) **EP 0 817 713 B1**
(45) Veröffentlichungstag und Bekanntmachung des Hinweises auf die Patenterteilung: **22.03.2000**
(21) Anmeldenummer: 96911967.6
(22) Anmeldetag: 29.03.1996
(51) Int. Cl.: B29C 43/20, B29C 43/36, B29D 11/00, B32B 3/00, G02B 6/28

(54) **VERFAHREN UND VORRICHTUNG ZUR HERSTELLUNG VON ZWEISCHICHTIGEN, LICHTLEITENDEN MIKROSTRUKTUREN DURCH ABFORMTECHNIK**
PROCESS AND DEVICE FOR PRODUCING DOUBLE-LAYER LIGHT-CONDUCTING MICROSTRUCTURES USING MOULDING TECHNIQUES
PROCEDE ET DISPOSITIF DE PRODUCTION PAR MOULAGE DE MICROSTRUCTURES A DEUX COUCHES CONDUCTRICES DE LA LUMIERE

(30) Priorität: 31.03.1995 DE 19511862
(43) Veröffentlichungstag der Anmeldung: 14.01.1998
(73) Patentinhaber: Forschungszentrum Karlsruhe GmbH, 76133 Karlsruhe (DE)
(72) Erfinder: RUPRECHT, Robert, D-75045 Walzbachtal (DE); Dr.MÜLLER, Claas, D-79232 March Holzhausen (DE)
(74) Vertreter: Jeck, Anton, Dipl.-Ing.
(86) Internationale Anmeldenummer: EP9601389
(87) Internationale Veröffentlichungsnummer: WO9630184

(56) Entgegenhaltungen:
- EP-A- 0 382 420
- EP-A- 0 420 168
- EP-A- 0 426 441
- EP-A- 0 439 050
- EP-A- 0 608 566
- WO-A-93/08016
- WO-A-93/23244
- US-A- 3 728 422
- US-A- 4 720 166
- US-A- 5 311 604
- PATENT ABSTRACTS OF JAPAN vol. 017, no. 112 (P-1498), 8.März 1993 & JP,A,04 299328 (TOPPAN PRINTING CO LTD), 22.Oktober 1992,
- PATENT ABSTRACTS OF JAPAN vol. 015, no. 316 (P-1237), 13.August 1991 & JP,A,03 114007 (VICTOR CO OF JAPAN LTD), 15.Mai 1991,
- PATENT ABSTRACTS OF JAPAN vol. 015, no. 192 (P-1202), 17.Mai 1991 & JP,A,03 045901 (MITSUBISHI RAYON CO LTD), 27.Februar 1991,
- PATENT ABSTRACTS OF JAPAN vol. 017, no. 372 (P-1573), 13.Juli 1993 & JP,A,05 060920 (NISSHA PRINTING CO LTD), 12.März 1993,

## Beschreibung

Die Erfindung betrifft ein Verfahren nach Anspruch 1 und eine Vorrichtung nach Anspruch 23 zur Herstellung von zweischichtigen lichtleitenden Mikrostrukturen durch Abformtechnik.

Mit zunehmendem Fortschritt der Mikrosystemtechnik besteht ein steigender Bedarf an lichtleitenden optischen Mikrostrukturen. Lichtleitende Mikrostrukturen, insbesondere lichtleitende LIGA-Mikrostrukturen, wurden bisher durch lithographische Verfahren hergestellt.

Durch die EP-A-608 566 ist ein Verfahren zur Herstellung eines optischen Befestigungssubstrats zum Halten von Lichtleitfasern und optischen Elementen bekannt, bei dem ein Befestigungssubstrat auf Glasbasis verwendet wird und eine bestimmte Oberflächenstruktur im Befestigungssubstrat in einem zeitlich zweistufigen Druckgußverfahren geschaffen wird. Die Formwerkzeuge (Matrizen) bestehen aus Hartmetall, das mit einer Indiumlegierung zur besseren Trennung des Befestigungssubstrats aus dem Formwerkzeug beschichtet ist. Zum Warmpressen dient ein flacher Stempel, der das Glassubstrat in die Struktur der Matrize drückt. Im zweiten Verfahrensschritt wird eine zweite Glasplatte zwischen einem Teil des Befestigungssubstrats und der Matrize eingefügt, so daß Lichtwellenleitbänke entstehen, wobei aber die Restschichtstärke der zweiten Glasplatte erheblich ist.

Durch die EP-A-382 420 ist ein Verfahren zur Herstellung einer Mikrostruktur auf einem Kunststoffartikel bekannt, bei dem eine Kunstharzmasse auf eine Matrize aufgebracht und mittels einer durchsichtigen Kunststoffolie abgedeckt wird, wonach mittels eines über die Folie geführten Gummirollers die Kunstharzmasse in die Matrize gedrückt wird. Danach wird die Kunstharzmasse mittels durch die Folie gelangendem, ultravioletten Lichts ausgehärtet und schließlich wird die Folie von der geformten Kunstharzmasse entfernt.

Durch die EP-A-420 168 ist ein Verbinder für Lichtleitfaserkabel bekannt, der dadurch hergestellt wird, daß eine Matrize in mindestens eine von zwei das Kabel einklemmenden, metallenen Hälften des Verbinders Rillen im Kaltpreßverfahren presst.

Durch die JP-A-4 299 328 ist ein Verfahren zur Herstellung eines Linsenblatts bekannt. Um die Zeit zur Herstellung des beidseitig linsenförmigen Blatts zu verringern, wird zur Bildung der Linsen eine durchsichtige, glasartige Preßform (Matrize) mit unter Ultraviolettlicht aushärtendem Kunstharz gefüllt. Die Deckfläche der Linsen wird mit einer durchsichtigen Kunststoffolie abgedeckt. Dann werden die Linsen mit der Folie verbunden, wobei Linsen und Folie zwischen einem Stempel und der Matrize zusammengepreßt werden. Von der durchsichtigen Matrizenseite her wird schließlich Ultraviolettlicht zum Aushärten eingesetzt.

Durch die JP-A-5 060 920 ist ein Verfahren zur Herstellung einer lichtstreuenden Kunststoffplatte bekannt. Dabei wird eine Metallmatrize mittels eines Preßwerkzeugs auf eine Kunststoffplatte unter Erhitzung vakuumgepreßt.

Ferner ist durch die JP-A-3 114 007 bekannt, auf eine optische Wellenleitschicht, die auf einer Substratschicht aufgebracht ist, eine fotopolymere Masse aufzutragen, die mittels einer lichtdurchlässigen Matrize in eine bestimmte Form gepreßt wird. Danach wird zur Vernetzung der fotopolymeren Schicht mit der Wellenleitschicht Licht von der durchsichtigen Matrize her zugeführt, wonach die Matrize wieder entfernt wird.

Bekannt sind lichtleitende Mikrostrukturen, hergestellt durch röntgentiefenlithographische Strukturierung eines dreischichtgen Resistsystems. Dazu wird ein Dreischichtsystem, bestehend aus Mantel-, Kern- und Mantelschicht, verschweißt und anschließend durch Röntgentiefenlithograhie strukturiert (C. Müller, J. Mohr: A Microspectrometer Fabricated by the LIGA Process; Interdisciplinary Science Review, Vol. 18, No. 3, 1993). Ferner ist in der Veröffentlichung von J. Göttert, J. Mohr, C. Müller, Examples and Potential Applications of LIGA Components in Micro-Optics, B.G. Teubner Verlagsgesellschaft, 1993, insbesondere auf S. 222, eine Abformtechnik von LIGA-Mikrostrukturen beschrieben, wobei ein einschichtiges Material verwendet wird. Schließlich ist dort auf S. 227 ein Verfahren zur Herstellung von lichtleitenden Mikrostrukturen gezeigt und beschrieben, die aus einem dreischichtigen Aufbau bestehen und durch parallele Röntgenstrahlung, wie sie an einem Synchrotron erzeugt wird, strukturiert werden.

Andere Herstellungsverfahren für Spektrometerbausteine (als Beispiel für eine lichtleitende Mikrostruktur) sind durch die Fertigung in Hybridtechnik mit großem Aufwand an Aufbau- und Verbindungstechnik sowie Justieraufwand der Einzelkomponeten zueinander (Gitter, Führungsschächte für Einkoppelfaser und Diodenzeile) verbunden, damit auch personalintensiv in der Herstellung und somit teuer.

Die Herstellung von lichtleitenden Mikrostrukturen, beispielsweise Gitterspektrometerbausteinen durch Röntgentiefenlithographie (RTL), ist mit erheblichen Kosten durch die Investition einer Röntgenquelle verbunden. Auch die Herstellungszeit für einen Gitterspektrometer ist bei RTL länger als beim Abformen.

Der Erfindung liegt somit die Aufgabe zugrunde, hier Abhilfe zu schaffen.

Die Aufgabe wird erfindungsgemäß durch das in Anspruch 1 beschriebene Verfahren und die in Anspruch 23 beschriebene Vorrichtung gelöst.

Die Lichtleitung erfolgt in der Kernschicht durch Totalreflexion des Lichtes an der Grenzschicht zwischen Kern- und Mantelschicht (B. Anderer, W. Ehrfeld, Grundlagen für die röntgentiefenlithographische Herstellung eines planaren Wellenlängen-Demultiplexers mit selbstfokusierendem Reflexionsgitter, März 1990, Kernforschungszentrum Karlsruhe, KfK-Bericht 4702). Die Kernschicht aus Kunststoff ist von einer Mantelschicht mit kleinerem Brechungsindex, die aus Kunststoff bzw. Luft besteht, umgeben. Durch das vorgeschlagene Verfahren wird erreicht, daß lichtleitende Mikrostrukturen im Zweischichtaufbau kostengünstiger aus einer mikrostrukturierten Kernschicht auf einer Mantelschicht, die teilweise strukturiert sein kann, gefertigt werden können. Als Deckschicht dient Luft. Statt Luft kann bei optischen Bauteilen ohne Gehäuse zum Schutz vor Umwelteinflüssen eine weitere Schicht als Deckschicht aufgebracht werden. Das vorgeschlagene Verfahren kann unterschiedlich ausgeführt werden. Diese Ausführungen werden im folgenden Zweischrittwarmumformen, Zweischichtwarmumformen und Reaktionsguß bezeichnet.

Beim Zweischrittwarmumformen wird zuerst eine Kernschicht durch Vakuumwarmumformen mit Hilfe eines Stempels mikrostrukturiert. Dabei wird die zunächst unstrukturierte Kernschicht entweder in der gewünschten Dicke oder entsprechend der Füllmenge, die in das vorgesehene Formnest des Abformwerkzeuges paßt, vorgelegt. Nach dem Vakuumwarmumformen der Kernschicht wird die Mantelschicht an die Kernschicht angeschweißt, indem die Kunststoffe von Kern- und Mantelschicht auf eine Temperatur in der Nähe der Übergangstemperatur (bei amorphen Polymeren = Glasübergangstemperatur) erwärmt und zusammengepreßt werden.

Bei Zweischichtwarmumformen wird zunächst ein Schichtverbund aus Kern- und Mantelschicht als unstrukturierter Folienstapel hergestellt, danach erfolgt das Einstellen der gewünschten Foliendicke und anschließendes Verschweißen der Folien. Schließlich wird der Folienstapel in einer Vakuumwarmumformmaschine so strukturiert, daß zumindest die Kernschicht die gewünschte Mikrostruktur trägt. Das Verschweißen der Mantelschicht mit der Kernschicht kann auch erst während des Warmumformens erfolgen.

Beim Reaktionsguß wird die Kernschicht durch Polymerisation eines Monomer-Polymergemisches im Formnest hergestellt. Dadurch wird eine vollständige Füllung des Formnestes erreicht. Anschließend erfolgt das Verschweißen der Kernschicht mit der Mantelschicht.

Eine weitere Alternative im Herstellungsprozeß ist die Verbindung der Mantelschicht mit der Kernschicht nicht durch Verschweißen, sondern durch einen Reaktionsguß der Mantelschicht direkt auf der Kernschicht (unstrukturiert oder strukturiert) zu realisieren. Im Falle von PMMA (Polymethymethacrylat) als Mantelschicht und PMMA-Copolymer als Kernschicht erfolgt jedoch während der Polymerisation der Mantelschicht auf der Kernschicht ein Eindiffundieren von Monomer des Mantelmaterials in die Kernschicht, so daß sich an der Grenzschicht die optischen und mechanischen Eigenschaften der Kernschicht ändern. Dies hat beispielsweise eine Spannungsrißbildung in der Kernschicht zur Folge, die die optischen Mikrostrukturen unbrauchbar macht. Somit ist eine Polymerisation der Mantelschicht auf die Kernschicht nur dann möglich, wenn Materialpaarungen verwendet werden, die ein Eindiffundieren von Mantelmaterial unter Beeinträchtigung des Kernmaterials verhindern. Weitere mögliche Werkstoffe sind grundsätzlich alle transparenten Kunststoffe, insbesondere Polycarbonate (PC) und deren Copolymere sowie Copolymer der Prolyolefine (COC).

Weitere zweckmäßige und vorteilhafte Ausgestaltungen der Erfindung sind in den abhängigen Ansprüchen angegeben.

Ein Ausführungsbeispiel der Erfindung ist in der Zeichnungen schematisch dargestellt und wird im folgenden näher erläutert. Es zeigen
- Fig. 1: eine Vorrichtung bestehend aus einer Matrize mit Zubehör,
- Fig. 2: eine Vorrichtung mit einer Matrize, einem Stempel und einer dazwischen eingelegten Kernschicht,
- Fig. 3: den Zustand der Kernschicht nach dem Warmumformen,
- Fig. 4: die in den Formnestern eingebrachte Kernschicht sowie die Matrize und den Stempel, zwischen die die Mantelschicht eingelegt ist,
- Fig. 5: den Verfahrenszustand nach dem Verschweißen der Mantelschicht auf die Kernschicht und
- Fig. 6: eine lichtleitende Struktur nach dem Abformen.

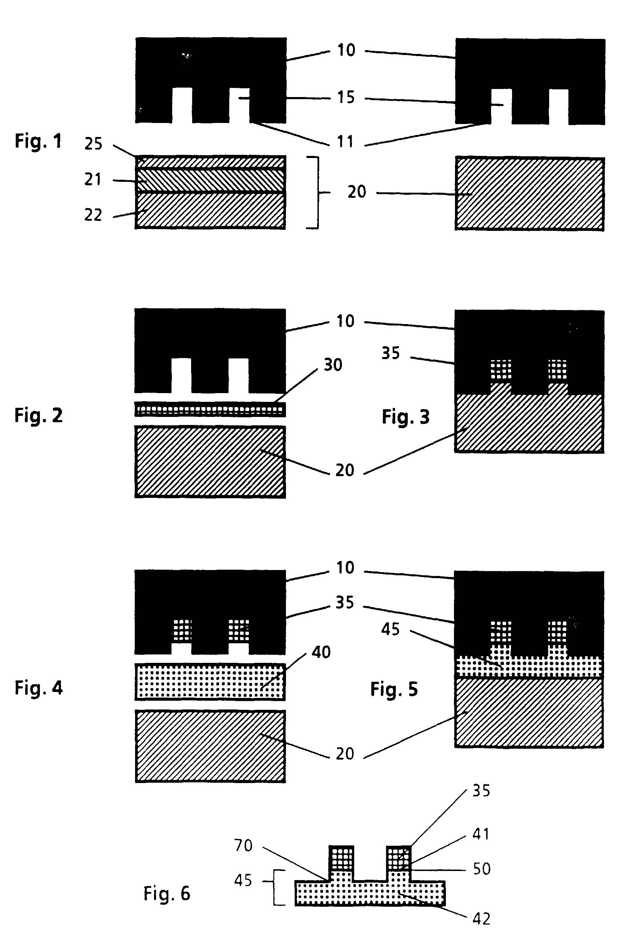

Anhand der Figuren 1 bis 6 werde das Verfahren und die Vorrichtung genauer erläutert. Als Beispiel für eine lichtleitende Mikrostruktur wurde ein Gitterspektrometerbaustein ausgewählt, der mit LIGA-Formeinsätzen als Matrizen 10 abgeformt wird.

Zunächst werden die Kernschicht 30 und Mantelschicht 40 getrennt als Folie polymerisiert bzw. Folien geprägt oder aus Granulat extrudiert und spritzgegossen. Zur Vorbereitung der Abformung werden die Folien 30 und 40 auf ihre Sollmaße bearbeitet. Für die Herstellung eines Gitterspektrometerbausteins beträgt die Dicke der Kernschicht 30 vor der Abformung 5 bis 2000 µm und die Dicke der Mantelschicht 40 von 7 bis 5000 µm. Zur Ankopplung des Gitterspektrometerbausteins an Multimodefasern sind Kernschichtdicken von 50 bis 110 µm, vorzugsweise 80 µm, und Mantelschichtdicken, vorzugsweise 400 bis 1000 µm, einzustellen. Die Kernschicht 30 besteht aus PMMA (Polymethylmethacrylat), die aus MMA und einem Initiator hergestellt wird. Die Mantelschicht 40 besteht aus 70-80 % MMA mit 20-30 % TFPMA-Copolymer, ein fluoriertes Copolymer des PMMA, und einem Initiator. Der Initiator sorgt für die Polymerisation des Materials. Grundsätzlich können für die Kernschicht 30 und Mantelschicht 40 auch andere Materialien eingesetzt werden, beispielsweise transparente Kunststoffe, insbesondere Polycarbonate (PC) oder Copolymere oder Copolymere der Polyolefine (COC), es muß jedoch ein Unterschied im Brechungsindex zwischen der Kernschicht 30, bzw. geprägte Kernschicht 35 und der Mantelschicht 40, bzw. geprägten Mantelschicht 45 bestehen, daß sich beim Fügen eine Grenzschicht 50 ausbildet, an der das Licht, das in der geprägten Kernschicht 35 mit höherem Brechungsindex geführt wird, refektiert wird. Für die Kernschicht 30 bzw. geprägten Kernschicht 35 ergibt sich ein Brechungsindex von n = 1,49 bei einer Wellenlänge von 590 nm, für die Mantelschicht 40, bzw. geprägten Mantelschicht 45 ein n = 1.467. Nach der Folienbearbeitung durch Polierfräsen bzw. Warmprägen wird die Kernschicht 30 durch Vakuumwarmumformen mikrostrukturiert. Zum Vakuumwarmumformen werden eine Vorrichtung, bestehend aus mindestens einer Matrize 10, die Mikrostrukturen aufweist, und einem Stempel 20, der Mikrostrukturen aufweisen kann, verwendet. Die Matrize 10 wird häufig auch als Werkzeugplatte mit Formeinsätzen 10 ausgeführt. Im Falle eines Gitterspektrometerbausteins werden harte Matrizen 10 bzw. Formeinsätze 10 aus Nickel oder Nickellegierungen, die beispielsweise galvanisch hergestellt wurden, verwendet.

Die Härte der Nickelformeinsätze weist mindestens 200 HV (0,1), die Härte vor der ersten Abformung bei Nickel 350 HV (0,1) bei Nickellegierungen mindestens 400 HV (0,1) auf. Diese Matrizen 10 bzw. Formeinsätze 10 werden durch das LIGA-Verfahren hergestellt. Es sind jedoch auch mechanich gefertigte Formeinsätze aus Messing oder Aluminiumlegierungen einsetzbar. Die Formeinsätze 10 weisen ein oder mehrere Formnester 15 auf, die vorteilhaft scharfe Kanten zur Formeinsatzstirnfläche aufweisen. Die Ebenheit der Formeinsätze ist besser als 50 µm Wölbung.

Als Stempel 20 wurden bevorzugt weiche Stempel 20 eingesetzt, die aus weichgeglühtem Aluminium oder Aluminiumlegierungen bestehen und eine Vickershärte von 15 bis 45 HV (0,1) aufweisen. Ebenfalls eignen sich Stempel 20 aus Elastomer, beispielsweise EPDM (Ethylen-Propylen-Dien-Elastomer) und weiche Stempel 20 aus Silikon, Kautschuk oder Silikon-Kautschuk. Eine weitere vorteilhafte Ausgestaltung des Stempels 20 ist die Verwendung einer Polyimidfolie (Kapton) oder Folie aus Fluorkunststoffen als Ersatz oder zusätzliche Deckschicht bzw. Beschichtung zu den aufgeführten Stempelmaterialien. Somit ergibt sich, abhängig von der abzuformenden Struktur, ein Stempel bestehend aus einem Elastomer oder aus einem Stapelaufbau, der unten mit einem Metallstempel beginnt, dann beispielsweise eine obere Platte 21 aus einer Aluminiumlegierung oder Silikonkautschuk folgt und schließlich die Stempeloberfläche 25 mit einer Polyimidfolie oder Teflonbeschichtung abschließt. Als Ersatz für den Silikonkautschuk ist bei bestimmten Strukturen eine obere Platte 21 aus Silikon, Kautschuk oder EPDM-Elastomer einsetzbar. Entscheidend für die Strukturierung von Kern- und Mantelschicht ist jedoch, daß sie mit den Folien und Beschichtungen aus Polyimiden oder Fluorkunststoffen keine Verbindung eingehen. Damit im Falle eines metallischen Stempels die Kanten am Formeinsatz nicht frühzeitig stumpf werden, sollte die Dicke der Folie bzw. der Beschichtung dicker sein als die Differenz zwischen Tiefe des Formnestes 15 und der geprägten Kernschichtdicke 35.

In einer besonderen Ausführungsform des Verfahrens, dem Zweischichtwarmumformen, bei dem die Kern- und Mantelschichten bereits gefügt sind oder nur lose aufeinander liegen, ist die Mantelschicht 40 identisch mit dem Stempel 20 für die Warmumformung der Kernschicht 30. Hier wird keine Folie oder Beschichtung auf die Mantelschicht 40 als Stempel 20 aufgebracht, damit die Mantelschicht 40 sich spätestens beim Umformen mit der Kernschicht 30 verbindet.

Die Umformung der Kernschicht 30 aus PMMA wird mit Umformkräften zwischen 5 und 100 kN bei Umformtemperaturen zwischen 105 und 260 °C durchgeführt. Für den Spektrometerbaustein beträgt die optimale Umformkraft 45 kN bei 176 °C, ist jedoch maschinenabhängig. Besonders gute Ergebnisse zur Formfüllung erhält man beim Umformen unter Vakuum. Bei diesen Prozeßparametern wird mit Hilfe eines weichen Stempels 20, der beim Warmumformen gegen die Formeinsatzstirnfläche gedrückt wird, die Kernschicht in die Formnester geprägt und eine minimale Restschichtdicke erreicht, die als unstrukturierte Schicht in einer Dicke von 0 bis ca. 50 µm an der Werkzeugstirnfläche verbleibt. Vorteilhaft ist der Einsatz eines weichgeglühten Reinaluminiumstempels 20 der Härte 30 HV (0,1) mit einer 75 µm dicken Kaptonfolie aus Polyimid (Kapton) als Stempeloberfläche 25 mit der Funktion einer Trennschicht. Werden die Umformparameter richtig gewählt, so ergibt sich an den Kanten der Formnester eine geringe Restschichtdicke und damit geringe Lichtverluste beim Ankoppeln von Lichtleitfasern an die abgeformten optischen Mikrostrukturen. Insbesondere bei Mikrostrukturen mit vergleichsweise großen Formnestern wird eine Restschichtdicke von ca. 0 µm dadurch erreicht, daß die Kernschicht 30 in Form einer Unterteilung in Stücke mit ihrer Schichtdicke und lateralen Maßen an das Volumen der zu füllenden Formnester 15 des Formeinsatzes 10 angepaßt wird. Bei Mikrostrukturen allgemeiner Art wird eine geringe Restschichtdicke dadurch erreicht, daß die Dicke der Kernschicht 30 kleiner ist als die Tiefe der Formnester 15 im Formeinsatz 10.

Zur Anwendung sind denkbar Kernschicht und Formnesttiefe zwischen 5 und 200 pm bei Mantelschichtdicken von 7 bis 5000 µm. Für optische Mikrostrukturen für den Multimode-Einsatz haben sich Kernschichtdicken von 50 bis 100 µm, Formnesttiefen von 80 bis 120 µm und Mantelschichtdicken bis 490 µm bewährt.

Nach dem Warmumformen der Kernschicht 30 verbleibt die geprägte Kernschicht 35 zunächst in den Formnestern des Formeinsatzes und es wird die Mantelschicht 40 auf die geprägte Kernschicht 35 verschweißt. Das Verschweißen erfolgt ebenfalls unter Vakuum, wobei die geprägte Kernschicht 35 und Mantelschicht 40 bis auf eine Temperatur von 80 bis 230 °C erwärmt und bei Umformkräften von 0,1 bis 50 kN verschweißt werden. Im Falle des Gitterspektrometers ist ein günstiger Parametersatz für das Verschweißen 138 °C und 450 N. Anschließend wird der Gitterspektrometerbaustein im zweischichtigen Aufbau - bestehend aus einer geprägten Kernschicht 35 und einer geprägten Mantelschicht 45 - aus dem Formeinsatz 10 entfernt. Analog dazu können andere lichtleitende Mikrostrukturen abgeformt werden. Es müssen jedoch die Abform- und Verweißparameter an die jeweilige Geometrie der Mikrostruktur angepaßt werden.

Nach dem Warmumformen und Verscheißen liegt eine lichtleitende Struktur vor, die eine Stufe aufweist. Die Stufe wird erzeugt zwischen dem strukturierten Bereich und dem unstrukturierten Bereich. Im strukturierten Bereich befindet sich die Kernschicht und je nach Verfahrensdurchführung ggf. auch ein Teil der Mantelschicht. Die Höhe der Stufe wird entsprechend an das Maß des Innendurchmessers bzw. an das Maß aus der Summe des Innendurchmessers und der einfachen Wandstärke der Lichtleitfasern angepaßt. So mündet im besten Falle die Kernschicht in den Innendurchmesser (Kern) der Lichtleitfaser und der strukturierte Bereich von der Mantelschicht wird von der Wandstärke der Lichtleitfaser überdeckt. Damit dies gelingt,ist die Tiefe des Formnestes 15 kleiner oder gleich der geprägten Kernschicht 35.

## Patentansprüche

1. Verfahren zum Herstellen einer mindestens zwei Schichten aufweisendem Struktur mit mindestens einer Kernschicht (30) und mindestens einer Mantelschicht (40), wobei mittels eines Werkzeuges, bestehend aus einer mindestens ein Formnest (15) aufweisenden Matrize (10) und einem Stempel (20), die Kernschicht (30) in das Formnest (15) eingebracht und mit der Mantelschicht (40) verbunden wird, dadurch gekennzeichnet, daß der Werkstoff des Stempels (20) weicher als der Werkstoff der Matrize (10) ist, so daß der Stempel (20) beim Abformen der Kernschicht (30) teilweise in die Matrize (10) eindringen kann.

2. Verfahren nach Anspruch 1,
dadurch gekennzeichnet,
a) daß zuerst eine Kernschicht (30) auf den Stempel (20) gelegt wird, daß daraufhin die Matrize (10), die Kernschicht (30) und der Stempel (20) auf ihre jeweilige, spezifische Umformtemperatur gebracht werden, daß im weiteren Schritt die Kernschicht (30) durch den Stempel (20) in das Formnest bzw. die Formnester (15) der Matrize (10) eingedrückt wird bzw. werden und hierbei der Stempel (20) so verformt wird, daß die Kernschicht (30) vollständig auf den Boden des Formnesters (15) gedrückt wird und dabei die Kernschicht (30) zur geprägten Kernschicht (35) strukturiert wird, daß daraufhin die Mantelschicht (40) eingelegt wird und die geprägte Kernschicht (35), die Mantelschicht (40), die Matrize (10) und der Stempel (20) auf ihre jeweilige spezifische Verschweißtemperatur gebracht werden und daß schließlich die Schichten (35,40) zusammengepreßt werden, so daß zumindest die geprägte Kernschicht (35) die Struktur als Abbild der Formnester (15) der Matrize (10) trägt, oder
b) daß ein Schichtverbund aus Kernschicht (30) und Mantelschicht (40) als unstrukturierter Schichtstapel (30,40) hergestellt und danach der Schichtstapel (30,40) mit Matrize (10) und Stempel (20) so strukturiert wird, wobei zumindest die geprägte Kernschicht (35) die gewünschte Struktur als Abbild der Formnester (15) der Matrize (10) trägt, oder
c) daß die geprägte Kernschicht (35) durch chemische Reaktion im Formnest hergestellt und anschließend das Verschweißen der geprägten Kernschicht (35) mit der Mantelschicht (40) so erfolgt, daß zumindest die geprägte Kernschicht (35) die gewünschte Struktur als Abbild der Formnester (15) der Matrize (10) trägt, oder
d) daß die geprägte Kernschicht (35) strukturiert wird und anschließend die Mantelschicht (40) durch chemische Reaktionen erzeugt und/oder auf die Kernschicht so aufgebracht wird, daß zumindest die geprägte Kernschicht (35) die gewünschte Struktur als Abbild der Formnester (15) der Matrize (10) trägt.

3. Verfahren nach Anspruch 1 oder 2,
dadurch gekennzeichnet,
daß eine Mikrostruktur, insbesondere eine LIGA-Mikrostruktur, mit optischen bzw. lichtleitenden Eigenschaften im Vakuum hergestellt wird.

4. Verfahren nach einem der Ansprüche 1 bis 3 zur Herstellung von Bauteilen für die Multimode-Technik bzw. Gitterspektrometerbausteine

5. Verfahren nach einem der Ansprüche 1 bis 4,
dadurch gekennzeichnet,
daß die Struktur mit einer Schutzschicht oder einem Gehäuse versehen wird.

6. Verfahren nach einem der Ansprüche 1 bis 5,
dadurch gekennzeichnet,
daß die Dicke der Kernschicht (30) kleiner oder gleich ist als oder wie die der Tiefe der Formnester (15).

7. Verfahren nach einem der Ansprüche 1 bis 6,
dadurch gekennzeichnet,
daß das Volumen der Formnester (15) mindestens dem Volumen der Kernschicht (30) entspricht bzw. größer ist.

8. Verfahren nach einem der Ansprüche 1 bis 7,
dadurch gekennzeichnet,
daß die Kernschicht (30) in mindestens einem Stück in mindestens ein Formnest (15) eingebracht wird.

9. Verfahren nach einem der Ansprüche 1 bis 8,
dadurch gekennzeichnet,
daß die Kernschicht (30) eine Dicke und die Formnester (15) eine Tiefe von 5 bis 2000 µm aufweisen, während die Mantelschicht (40) eine Dicke von 7 bis 5000 µm aufweist.

10. Verfahren nach einem der Ansprüche 1 bis 9,
dadurch gekennzeichnet,
daß bei optischen Mikrostrukturen
a) für Multimode-Anwendungen mit Multimodefasern mit ca. 125 µm Durchmesser die Kernschicht (30) eine Dicke von 50 bis 110 µm, die Formnester (15) eine Tiefe von 80 bis 120 µm und die Mantelschicht (40) eine Dicke von 10 bis 490 µm aufweisen, bzw.
b) für beliebige optische Fasern die Dicke der geprägten Kernschicht (35) mit dem Kerndurchmesser von optischen Fasern und die Höhe des strukturierten Bereichs (41) der geprägten Mantelschicht (45) mit der Manteldicke von optischen Fasern vergleichbar ist.

11. Verfahren nach einem der Ansprüche 1 bis 9,
dadurch gekennzeichnet,
daß die Kernschicht (30) bei einer Umformkraft von 5 bis 100 kN und Temperaturen zwischen Glasübergangstemperatur und maximaler Spritzgießtemperatur - für PMMA zwischen 105 und 260 Grad Celsius - und die Mantelschicht (40) bei einer Verschweißkraft von 0,1 bis 50 kN und Temperaturen zwischen Erweichungstemperatur und üblicher Spritzgießtemperatur - bei PMMA-Copolymer zwischen 80 und 230 °C-umgeformt werden.

12. Verfahren nach einem der Ansprüche 1 bis 11,
dadurch gekennzeichnet, daß bei optischen Mikrostrukturen für Multimode-Anwendung die Kernschicht (30) bei einer Umformkraft von 20 bis 100 kN und Temperaturen zwischen 160 und 180 °C und die Mantelschicht (40) bei einer Verschweißkraft von 0,1 bis 20 kN und Temperaturen zwischen 130 und 150 °C umgeformt werden.

13. Verfahren nach einem der Ansprüche 1 bis 12,
dadurch gekennzeichnet,
daß die Kernschicht (30) aus PMMA (Polymethylmethacrylat) und die Mantelschicht (40) aus einem fluorierten Copolymer (erzeugt aus 70 bis 80 % MMA und 20 bis 30 % TFPMA-Copolymer) hergestellt wird.

14. Verfahren nach einem der Ansprüche 1 bis 13,
dadurch gekennzeichnet,
daß die Kernschicht (30) und die Mantelschicht (40) aus transparenten Kunststoffen, insbesondere Polycarbonaten und/oder ihren Copolymeren und/oder den Copolymeren der Polyolefine hergestellt werden.

15. Verfahren nach einem der Ansprüche 1 bis 14,
dadurch gekennzeichnet,
daß die Matrize (10) aus Nickel bzw. Nickellegierungen besteht, das/die eine Vickershärte von mindestens 200 HV (0,1) aufweist bzw. aufweisen.

16. Verfahren nach einem der Ansprüche 1 bis 15,
dadurch gekennzeichnet,
daß die Matrize (10) scharfe Kanten zu den Formnestern (15) aufweist.

17. Verfahren nach einem der Ansprüche 1 bis 16,
dadurch gekennzeichnet,
daß ein Stempel (20) oder die obere Platte (21) des Stempels (20) aus weichgeglühtem Aluminium bzw. Aluminiumlegierung verwendet wird, das bzw. die eine Vickershärte 15 bis 45 HV (0,1) aufweist bzw. aufweisen.

18. Verfahren nach Ansprüche 1 bis 17,
dadurch gekennzeichnet,
daß ein Stempel (20) oder seine obere Platte (21) des Stempels aus Elastomer, EPDM (Ethylen-Propylen-Dien-Elastomer), Silikon, Kautschuk bzw. Silikonkautschuk verwendet wird, der/die sich mit der geprägten Kern- und Mantelschicht (35,45) nicht verbindet.

19. Verfahren nach einem der Ansprüche 1 bis 18,
dadurch gekennzeichnet,
daß ein Stempel (20) oder eine obere Platte (21) des Stempels (20) (bzw. eine Stempeloberfläche (25) auf dem Stempel) aus Polyimid oder einem Fluorkunststoff (bzw. Polyimid- oder Fluorkunststoffolie oder - beschichtung) verwendet wird, der/die sich mit der Kern- und Mantelschicht nicht verbindet.

20. Verfahren nach einem der Ansprüche 1 bis 19,
dadurch gekennzeichnet,
daß der Stempel (20) oder die obere Platte (21) des Stempels zur Umformung der Kernschicht eine Schicht aus Mantelmaterial ist und zur Umformung der Mantelschicht (40) der unteren Teile (22) des Stempels aus einem anderen Material verwendet wird, so daß sich beim Umformen die Mantelschicht (40) mit der geprägten Kernschicht (35) verbindet.

21. Verfahren nach einem der Ansprüche 1 bis 20,
dadurch gekennzeichnet,
daß eine Stufe (70) gebildet wird, durch die geprägte Kernschicht (35) bzw. die geprägte Kernschicht (35) und Teile der Mantelschicht (41) einerseits und durch die geprägte Mantelschicht (45) bzw. den Rest (42) der Mantelschicht andererseits, deren Stufenhöhe größer oder gleich ist als der Dicke der geprägten Kernschicht (35) bzw. deren Stufenhöhe der Summe aus Innendurchmesser plus einfache Wandstärke einer Lichtleitfaser entspricht, so daß auf die Stufe (70) der geprägten Mantelschicht (45 bzw. 42) mindestens eine optische Faser angekoppelt wird.

22. Verfahren nach einem der Ansprüche 1 bis 21,
dadurch gekennzeichnet,
daß als Stempel (20) zur Umformung der Mantelschicht (40) ein Material verwendet wird, das sich mit der geprägten Mantelschicht (45) verbindet und somit ein Substrat für die lichtleitende Struktur bildet.

23. Vorrichtung zur Durchführung des Verfahrens nach einem der Ansprüche 1 bis 22,
gekennzeichnet durch
eine mindestens ein Formnest (15) aufweisende Matrize (10) und einen mindestens einschichtigen Stempel (20).

24. Vorrichtung nach Anspruch 23,
dadurch gekennzeichnet,
daß die Dicke der Kernschicht (30) kleiner oder gleich ist als oder wie die Tiefe der Formnester (15).

25. Vorrichtung nach Anspruch 23 oder 24,
dadurch gekennzeichnet,
daß die Matrize (10) aus Nickel bzw. Nickellegierungen besteht, das/die eine Vickershärte von mindestens 200 HV (0,1) aufweist bzw. aufweisen, und daß die Matrize (10) scharfe Kanten zu den Formnestern (15) aufweist.

26. Vorrichtung nach einem der Ansprüche 23 bis 25,
dadurch gekennzeichnet,
daß der Stempel (20) und die obere Platte (21) des Stempels aus weichgeglühtem Aluminium (bzw. Aluminiumlegierung) besteht, das (die) die Vickershärte 15 bis 45 HV (0,1) aufweist.

27. Vorrichtung nach einem der Ansprüche 23 bis 26,
dadurch gekennzeichnet,
daß der Stempel (20) und die obere Platte (21) des Stempels aus Elastomer, EPDM (Ethylen-Propylen-Dien-Elastomer), Silikon, Kautschuk bzw. Silikonkautschuk besteht, der/die sich mit der geprägten Kern- und der geprägten Mantelschicht (35, 45) nicht verbindet.

28. Vorrichtung nach einem der Ansprüche 23 bis 27,
dadurch gekennzeichnet,
daß der Stempel (20) und die obere Platte (21) des Stempels (bzw. eine Stempeloberfläche (25) auf dem Stempel) aus Polyimid oder Fluorkunststoff (bzw. aus einer Folie oder Beschichtung aus Polyimid oder Fluorkunststoff) besteht.

29. Vorrichtung nach einem der Ansprüche 23 bis 28,
dadurch gekennzeichnet,
daß der Stempel oder die obere Platte (21) des Stempels zur Umformung der geprägten Kernschicht (35) eine Schicht aus Mantelmaterial ist und zur Umformung der Mantelschicht der untere Teil (22) des Stempels aus einem anderen Material besteht, so daß sich beim Umformen die geprägte Mantelschicht (45) mit der Kernschicht verbindet.

30. Vorrichtung nach einem der Ansprüche 23 bis 29,
dadurch gekennzeichnet,
daß als Stempel (20) zur Umformung der Mantelschicht (40) ein Material verwendet wird, das sich mit der geprägten Mantelschicht (45) verbindet und somit ein Substrat für die lichtleitende Struktur bildet.

## Claims

1. Method of manufacturing a structure having at least two layers and with at least one core layer (30) and at least one cladding layer (40), wherein, by means of a tool, consisting of a matrix (10) having at least one moulding nest (15) and a die (20), the core layer (30) is put into the moulding nest (15) and connected there to the cladding layer (40), characterised in that the material of the die (20) is softer than the material of the matrix (10), so that the die (20) can partially penetrate the matrix (10) during the moulding to shape of the core layer (30).

2. Method according to claim 1, characterised in that:
a) first of all a core layer (30) is laid on the die (20), in that then the matrix (10), the core layer (30) and the die (20) are brought to their respective, specific transition forming temperature, in that in the next step the core layer (30) is pressed by the die (20) into the moulding nest or nests (15) of the matrix and the die (20) is hereby so deformed that the core layer (30) is completely pressed to the base of the moulding nest (15) and at the same time the core layer (30) is structured to the embossed core layer (35), in that the cladding layer (40) is then inserted and the embossed core layer (35), the cladding layer (40), the matrix (10) and the die (20) are brought to their specific bonding temperature, and in that, finally, the layers (35,40) are pressed together so that at least the embossed core layer (35) carries the structure as a copy of the moulding nests (15) of the matrix (10), or
b) in that an interlaminar bond comprising core layer (30) and cladding layer (40) is manufactured as an unstructured stack of layers (30,40) and thereafter the stack of layers (30,40) is so structured with the matrix and die, at least the embossed core layer (35) carrying the desired structure as a copy of the moulding nests (15) of the matrix (10), or
c) in that the embossed core layer (35) is produced by a chemical reaction in the moulding nest and then the bonding of the embossed core layer (35) with the cladding layer (40) takes place in such a way that at least the embossed core layer (35) carries the desired structure as a copy of the moulding nests (15) of the matrix (10), or
d) in that the embossed core layer (35) is structured and then the cladding layer is produced by chemical reactions and/or so applied to the core layer that at least the embossed core layer (35) carries the desired structure as a copy of the moulding nests (15) of the matrix (10).

3. Method according to claim 1 or 2, characterised in that a microstructure, especially a LIGA microstructure, with optical or light-conductive properties is manufactured in a vacuum.

4. Method according to one of claims 2 to 3 for the manufacture of components for multimode technology or grating spectrometer components.

5. Method according to one of claims 1 to 4, characterised in that the structure is provided with a protective layer or a housing.

6. Method according to one of claims 1 to 5, characterised in that the thickness of the core layer (30) is smaller than or the same as the depth of the moulding nests (15).

7. Method according to one of claims 1 to 6, characterised in that the volume of the moulding nests (15) at least corresponds to the volume of the core layer (30) or is greater than same.

8. Method according to one of claims 1 to 7, characterised in that the core layer (30) is introduced in at least one piece into at least one moulding nest (15).

9. Method according to one of claims 1 to 8, characterised in that the core layer (30) has a thickness of 5 to 2000 µm and the moulding nests (15) a depth of 5 to 2000 µm, whilst the cladding layer (40) has a thickness of 7 to 5000 µm.

10. Method according to one of claims 1 to 9, characterised in that on optical microstructures
a) for multimode applications with multimode fibres having a diameter of approx. 125 µm, the core layer (30) has a thickness of 50 to 110 µm, the moulding nests (15) a depth of 80 to 120 µm and the cladding layer (40) a thickness of 10 to 490 µm, or
b) for any optical fibres the thickness of the embossed core layer (35) is comparable with the core diameter of optical fibres and the height of the structured region (41) of the embossed cladding layer (45) is comparable with the thickness of the cladding of optical fibres.

11. Method according to one of claims 1 to 9, characterised in that the core layer (30) is formed with a forming force of 5 to 100 kN and temperatures between glass transition temperature and maximum injection moulding temperature - for PMMA between 105 and 260 degrees Celsuis - and the cladding layer (40) with a bonding force of 0.1 to 50 kN and temperatures between softening temperature and the usual injection moulding temperature - with PMMA-copolymers between 80 and 230°C.

12. Method according to one of claims 1 to 11, characterised in that on optical microstructures for multimode application, the core layer (30) is formed with a forming force of 20 to 100 kN and temperatures between 160 and 180°C and the cladding layer (40) with a bonding force of 0.1 to 20 kN and temperatures between 130 and 150°C.

13. Method according to one of claims 1 to 12, characterised in that the core layer (30) is manufactured from PMMA (polymethyl methacrylate) and the cladding layer (40) from a fluorinated copolymer (produced from 70 to 80% MMA and 20 t0 30% TFPMA-copolymer).

14. Method according to one of claims 1 to 13, characterised in that the core layer (30) and the cladding layer (40) are manufactured from transparent plastics, especially polycarbonates and/or their copolymers and/or the copolymers of polyolefins.

15. Method according to one of claims 1 to 14, characterised in that the matrix (10) consists of nickel or nickel alloys which has or have a Vickers hardness of at least 200 HV (0.1).

16. Method according to one of claims 1 to 15, characterised in that the matrix (10) has sharp edges to the moulding nests (15).

17. Method according to one of claims 1 to 16, characterised in that a die (20) or the upper plate (21) of the die made of soft-annealed aluminium or aluminium alloy is used which has a Vickers hardness of 15 to 45 HV (0.1).

18. Method according to one of claims 1 to 17, characterised in that a die (20) or its upper plate (21) made of elastomer, EPDM (ethylene-propylenediene-elastomer), silicone, rubber or silicone rubber, is used which does not combine with the embossed core and cladding layers (35,45).

19. Method according to one of claims 1 to 18, characterised in that a die (20) or an upper plate (21) of the die (20) (or a die surface (25) on the die) made of polyimide or a fluoroplastic (or polyimide or fluoroplastic film or coating) is used which does not combine with the core and cladding layers.

20. Method according to one of claims 1 to 19, characterised in that the die (20) or the upper plate (21) of the die for forming the core layer is a layer made of the cladding material and for forming the cladding layer (40) of the lower portions (22) of the die a layer made of another material is used, so that during the forming process the cladding layer (40) combines with the embossed core layer (35).

21. Method according to one of claims 1 to 20, characterised in that a step (70) is formed, through the embossed core layer (35) or the embossed core layer (35) and portions of the cladding layer (41) on the one hand and through the embossed cladding layer (45) or the residue (42) of the cladding layer on the other hand, the height of which step is greater than or the same as the thickness of the embossed core layer (35), or the height of which step corresponds to the sum of the inside diameter plus the single wall thickness of an optical fibre; so that at least one optical fibre is connected to the step (70) of the embossed cladding layer (45 or 42).

22. Method according to one of claims 1 to 21, characterised in that as a die (20) for forming the cladding layer (40), a material is used which combines with the embossed cladding layer (45) and thus forms a substrate for the light-conductive structure.

23. Device for carrying out the method according to one of claims 1 to 22, characterised by a matrix (10) having at least one moulding nest (15) and by a die (20) with at least one layer.

24. Device according to claim 23, characterised in that the thickness of the core layer (30) is smaller than or the same as the depth of the moulding nests (15).

25. Device according to claim 23 or 24, characterised in that the matrix (10) consists of nickel or nickel alloys which has or have a Vickers hardness of at least 200 HV (0.1), and in that the matrix (10) has sharp edges to the moulding nests (15).

26. Device according to one of claims 23 to 25, characterised in that the die (20) and the upper plate (21) of the die consist of soft-annealed aluminium (or aluminium alloy) which has a Vickers hardness of 15 to 45 HV (0.1).

27. Device according to one of claims 23 to 26, characterised in that the die (20) and the upper plate (21) of the die consist of elastomer, EPDM (ethylene-propylene-diene-elastomer), silicone, rubber or silicone rubber, which does not combine with the embossed core layer and the embossed cladding layer (35,45).

28. Device according to one of claims 23 to 27, characterised in that the die (20) and the upper plate (21) of the die (or a die surface (25) on the die) consist of polyimide or fluoroplastic (or of a film or coating of polyimide or fluroplastic).

29. Device according to one of claims 23 to 28, characterised in that the die or the upper plate (21) of the die for forming the embossed core layer (35) is a layer of cladding material and for forming the cladding layer the lower portion (22) of the die consists of another material, so that during the forming process the embossed cladding layer (45) combines with the core layer.

30. Device according to one of claims 23 to 29, characterised in that as a die (20) for forming the cladding layer (40) a material is used which combines with the embossed cladding layer (45) and thus forms a substrate for the light-conductive structure.

## Revendications

1. Procédé pour la production d'une structure comprenant au moins deux couches, avec au moins une couche centrale (30) et au moins une couche de couverture (40)
où,
au moyen d'un outil constitué d'un poinçon (20) et d'une matrice (10) présentant au moins une cavité de formage (15), la couche centrale (30) est introduite dans la cavité de formage (15) et réunie avec la couche de couverture (40),
caractérisé
en ce que le matériau dont est fait le poinçon (20) est moins dur que le matériau dont est faite la matrice (10) de sorte que le poinçon (20) peut, lors du moulage de la couche centrale (30), pénétrer partiellement dans la matrice (10).

2. Procédé suivant la revendication 1,
caractérisé
a) en ce qu'une couche centrale (30) est d'abord posée sur le poinçon (20), qu'ensuite la matrice (10), la couche centrale (30) et le poinçon (20) sont portés, chacun, à la température de déformation spécifique qui leur est propre, que, dans l'étape suivante, le poinçon (20) fait pénétrer la couche centrale (30) dans la ou les cavité(s) de formage (15) de la matrice (10), que le poinçon (20) est alors déformé de manière telle que la couche centrale (30) est poussée totalement sur le fond de la cavité de formage (15), que la couche centrale (30) est alors structurée en une couche centrale estampée (35), qu'ensuite la couche de couverture (40) est mise en place et que la couche centrale estampée (35), la couche de couverture (40), la matrice (10) et le poinçon sont portés, chacun, à la température de soudage qui leur est propre, et que, finalement, les couches (35,40) sont réunies par pression, de sorte que la couche centrale estampée (35) au moins porte la structure reproduisant les cavités de formage (15) de la matrice (10), ou
b) en ce qu'un ensemble consistant en une couche centrale (30) et une couche de couverture (40) est réalisé en tant que pile de couches (30,40) non structurée et qu'ensuite la pile de couches (30,40) est structurée au moyen de la matrice (10) et du poinçon (20) de manière telle que la couche centrale estampée (35) au moins porte la structure dont on a désiré qu'elle reproduise les cavités de formage (15) de la matrice (10), ou
c) en ce que la couche centrale estampée (35) est réalisée au moyen d'une réaction chimique dans la cavité de formage et qu'ensuite la réunion par soudage de la couche centrale estampée (35) avec la couche de couverture (40) se produit de manière telle que la couche centrale estampée (35) au moins porte la structure dont on a désiré qu'elle reproduise les cavités de formage (15) de la matrice (10), ou
d) en ce que la couche centrale estampée (35) est structurée et qu'ensuite la couche de couverture (40) est réalisée au moyen de réactions chimiques et/ou est placée sur la couche centrale de manière telle que la couche centrale estampée (35) au moins porte la structure dont on a désiré qu'elle reproduise les cavités de formage (15) de la matrice (10).

3. Procédé suivant la revendication 1 ou la revendication 2,
caractérisé
en ce qu'une microstructure, une microstructure LIGA notamment, est réalisée sous vide avec des propriétés optiques ou conductrices de la lumière.

4. Procédé suivant l'une quelconque des revendications 1 à 3 pour la production de composants pour la technique multimode ou de composants pour spectromètres à grille.

5. Procédé suivant l'une quelconque des revendications 1 à 4
caractérisé
en ce que la structure est pourvue d'une couche de protection ou d'un boîtier.

6. Procédé suivant l'une quelconque des revendications 1 à 5
caractérisé
en ce que l'épaisseur de la couche centrale (30) est inférieure ou égale à la profondeur des cavités de formage (15).

7. Procédé suivant l'une quelconque des revendications 1 à 6
caractérisé
en ce que le volume des cavités de formage (15) est au moins égal ou supérieur au volume de la couche centrale (30).

8. Procédé suivant l'une quelconque des revendications 1 à 7
caractérisé
en ce que la couche centrale (30) est introduite en une pièce au moins dans une cavité de formage (15) au moins.

9. Procédé suivant l'une quelconque des revendications 1 à 8
caractérisé
en ce que la couche centrale (30) présente un épaisseur et les cavités de formage (15) une profondeur de 5 à 2000 µm, tandis que la couche de couverture (40) présente une épaisseur de 7 à 5000 µm.

10. Procédé suivant l'une quelconque des revendications 1 à 9
caractérisé
en ce que dans le cas de microstructures optiques,
a) pour des applications multimodes faisant appel à des fibres multimodes d'un diamètre d'environ 125 µm, la couche centrale (30) présente une épaisseur de 50 à 110 µm, les cavités de formage (15) une profondeur de 80 à 120 µm et la couche de couverture (40) une épaisseur de 10 à 490 µm, ou
b) pour tous types de fibres optiques, l'épaisseur de la couche centrale estampée (35) et le diamètre intérieur des fibres optiques sont comparables et que la hauteur de la zone structurée (41) de la couche centrale estampée (35) et l'épaisseur de la paroi des fibres optiques sont comparables.

11. Procédé suivant l'une quelconque des revendications 1 à 9
caractérisé
en ce que la couche centrale (30) est formée en utilisant une force de formage de 5 à 100 kN et des températures comprises entre la température de vitrification et la température de moulage par injection, ces températures variant pour le PMMA de 105 degrés Celsius à 260° degrés Celsius, et que le formage de la couche de couverture (40) se fait avec application, lors du soudage, d'une force variant de 0,1 à 50kN et par une température comprise entre la température de ramollissement et la température de moulage par injection traditionnelle, ces températures variant pour les copolymères de PMMA de 80°C à 230°C.

12. Procédé suivant l'une quelconque des revendications 1 à 11
caractérisé
en ce que, dans les microstructures destinées à des applications multimodes, la couche centrale (30) est formée sous application d'une force de formage de 20 à 100 kN et à des températures comprises entre 160°C et 180°C, et que la couche de couverture (40) est formée avec application, lors du soudage, d'une force comprise entre 0,1 et 20kN, et à des températures variant de 130°C et 150°C.

13. Procédé suivant l'une quelconque des revendications 1 à 12
caractérisé
en ce que la couche centrale (30) est réalisée en PMMA (polymétacrylate de méthyle) et que la couche de couverture (40) est réalisée en un copolymère fluoré (obtenu à partir de 70 à 80% de MMA et de 20 à 30% d'un copolymère de TFPMA).

14. Procédé suivant l'une quelconque des revendications 1 à 13
caractérisé
en ce que la couche centrale (30) et la couche de couverture (40) sont réalisés dans des matières plastiques transparentes, en particulier des polycarbonates et/ou leurs copolymères et/ou les copolymères des polyoléfines.

15. Procédé suivant l'une quelconque des revendications 1 à 14
caractérisé
en ce que la matrice (10) est en nickel ou en des alliages de nickel qui présente(nt) une dureté Vickers d'au moins 200 HV (0,1).

16. Procédé suivant l'une quelconque des revendications 1 à 15
caractérisé
en ce que la matrice présente, côté cavités de formage (15), des arêtes vives.

17. Procédé suivant l'une quelconque des revendications 1 à 16
caractérisé
en ce qu'il est fait usage d'un poinçon (20), ou d'une plaque supérieure (21) du poinçon (20), qui est en aluminium ayant fait l'objet d'un recuit d'adoucissement ou en alliage d'aluminium, et présente(nt) une dureté Vickers comprise entre 15 et 45 HV (0,1).

18. Procédé suivant l'une quelconque des revendications 1 à 17
caractérisé
en ce qu'il est fait usage d'un poinçon (20) ou d'une plaque supérieure (21) du poinçon (20) faits d'un élastomère, d'EPDM (élastomère d'éthylène-propylène-diène), de silicone, de caoutchouc, ou de caoutchouc siliconé qui ne se lie(nt) ni à la couche centrale estampée, ni à la couche de couverture (35,45).

19. Procédé suivant l'une quelconque des revendications 1 à 18
caractérisé
en ce qu'il est fait usage d'un poinçon (20), ou d'une plaque supérieure (21) du poinçon (20) (ou d'une surface de poinçon (25) recouvrant le poinçon) faits de polyimide ou d'une matière plastique fluorée (ou d'une feuille de polyimide ou d'une feuille de plastique fluoré, ou d'un surfaçage réalisé au moyen de ces matériaux) qui ne se lie(nt) ni à la couche centrale estampée ni à la couche de couverture.

20. Procédé suivant l'une quelconque des revendications 1 à 19
caractérisé
en ce que le poinçon (20) ou la plaque supérieure (21) du poinçon utilisé(e) pour le formage de la couche centrale est constitué par une couche faite du matériau de couverture et que, pour le formage de la couche de couverture (40), la partie inférieure (22) du poinçon est faite d'un autre matériau de sorte que, lors du formage, la couche de couverture estampée (45) se lie à la couche centrale estampée (35).

21. Procédé suivant l'une quelconque des revendications 1 à 20
caractérisé
en ce qu'il est formé un gradin (70) dans la couche centrale estampée (35), ou dans la couche centrale estampée (35) et des parties de la couche de couverture (41) d'une part et dans la couche de couverture estampée (45) ou dans le reste (42) de la couche de couverture d'autre part, la hauteur du gradin étant supérieure ou égale à l'épaisseur de la couche centrale estampée (35), la hauteur du gradin pouvant aussi correspondre à la somme du diamètre intérieur et de l'épaisseur de la paroi, prise une seule fois, d'une fibre optique de sorte qu'au gradin (70) de la couche de couverture (45 ou 42) sera accouplée au moins une fibre optique.

22. Procédé suivant l'une quelconque des revendications 1 à 21
caractérisé
en ce que, comme poinçon (20) pour le formage de la couche de couverture (40), il est fait usage d'un matériau qui se lie à la couche de couverture estampée (45) et constitue dès lors un substrat pour la structure conductrice de la lumière.

23. Dispositif suivant l'une quelconque des revendications 1 à 22
caractérisé
par une matrice (10) présentant au moins une cavité de formage (15) et un poinçon (20) comportant au moins une couche.

24. Dispositif suivant la revendications 23
caractérisé
en ce que l'épaisseur de la couche centrale (30) est inférieure ou égale à la profondeur des cavités de formage (15).

25. Dispositif suivant la revendications 23 ou la revendication 24
caractérisé
en ce que la matrice (10) est en nickel ou en des alliages de nickel présentant une dureté Vickers d'au moins 200 HV (0,1) et que la matrice présente, côté cavités de formage (15), des arêtes vives.

26. Dispositif suivant l'une quelconque des revendications 23 à 25
caractérisé
en ce que le poinçon (20) et la plaque supérieure (21) du cachet sont en aluminium ayant fait l'objet d'un recuit d'adoucissement (ou en alliage d'aluminium) présentant une dureté Vickers comprise entre 15 et 45 HV (0,1).

27. Dispositif suivant l'une quelconque des revendications 23 à 26
caractérisé
en ce que le poinçon (20) et la plaque supérieure (21) du poinçon (20) sont faits d'un élastomère, d'EPDM (élastomère d'éthylène-propylène-diène), de silicone, de caoutchouc, ou de caoutchouc siliconé qui ne se liant ni à la couche centrale estampée, ni à la couche de couverture (35,45).

28. Dispositif suivant l'une quelconque des revendications 23 à 27
caractérisé
en ce que le poinçon (20) et la plaque supérieure (21) du poinçon (20) (ou une surface de poinçon (25) recouvrant le poinçon) sont faits de polyimide ou d'un plastique fluoré (ou d'une feuille de polyimide ou d'une feuille de plastique fluoré, ou d'un surfaçage réalisé au moyen de ces matériaux).

29. Dispositif suivant l'une quelconque des revendications 23 à 28
caractérisé
en ce que le poinçon (20) ou la plaque supérieure (21) du poinçon utilisé(e) pour le formage de la couche centrale estampée (35) sont constitués par une couche fait(e) du matériau de couverture et que, pour le formage de la couche de couverture (40), la partie inférieure (22) du poinçon est faite d'un autre matériau de sorte que, lors du formage, la couche de couverture estampée (45) se lie à la couche centrale estampée (35).

30. Dispositif suivant l'une quelconque des revendications 23 à 29
caractérisé
en ce que, comme poinçon (20) pour le formage de la couche de couverture (40), il est fait usage d'un matériau qui se lie à la couche de couverture estampée (45) et forme dès lors un substrat pour la structure conductrice de la lumière.
